# FASCICULE DE BREVET EUROPEEN

(11) **EP 0 383 646 B1**
(45) Date de publication et mention de la délivrance du brevet: **29.09.1993**
(21) Numéro de dépôt: 90400287.0
(22) Date de dépôt: 02.02.1990
(51) Int. Cl.: H04N 9/31

(54) **Dispositif de visualisation à haute définition, en couleur**
Hochauflösende Farbsichtanzeigevorrichtung
High-definition colour display device

(30) Priorité: 07.02.1989 FR 8901533
(43) Date de publication de la demande: 22.08.1990
(73) Titulaire: THOMSON-CSF, 75008 Paris (FR)
(72) Inventeur: Plantier, Denis, Thomson-CSF, F-92045 Paris La Défense (FR); Gerbe, Jean-Pierre, Thomson-CSF, F-92045 Paris La Défense (FR); Perbet, Jean-Noel, Thomson-CSF, F-92045 Paris La Défense (FR)
(74) Mandataire: Courtellemont, Alain

(56) Documents cités:
- EP-A- 0 295 137
- GB-A- 2 161 615
- DIGEST OF TECHNICAL PAPERS OF THE 1987 SID INTERNATIONAL SYMPOSIUM, New Orleans, Louisiana, 12-14 mai 1987, vol. XVII, pages 75-78, Palisades Institute for Research Services, New York, US; S. ARUGA et al.: "High-resolution full-color video projector with poly-Si TFT array light valves"
- OPTICAL ENGINEERING, vol. 24, no. 5, septembre/octobre 1985, pages 769-780, Society of Photo-optical Instrumentation Engineers, Bellingham, US; J.R. MAGARINOS et al.: "Holographic mirrors"

## Description

L'invention concerne un dispositif de visualisation en couleurs, utilisable notamment dans le tableau de bord d'un avion militaire, pour présenter au pilote une image en couleurs à haute définition ; et utilisable, dans le domaine du grand public, pour réaliser un projecteur d'images de télévision.

Il est connu, notamment par la demande de brevet français FR-A- 2 584 257,de réaliser un dispositif de visualisation collimatée, en couleurs, et à haute définition, comportant :
- trois tubes cathodiques commandés respectivement par trois signaux électriques représentant respectivement une image rouge, une image verte, et une image bleue ;
- un premier dispositif optique mélangeur comportant une première lame dichroïque pour fournir un faisceau résultant de la superposition d'un faisceau de rayons issus du tube cathodique vert et d'un faisceau de rayons issus du tube cathodique rouge ;
- un second dispositif optique mélangeur comportant une seconde lame dichroïque recevant le faisceau résultant fourni par le premier dispositif mélangeur et recevant un faisceau de rayons issus du tube cathodique bleu, pour fournir un faisceau résultant de la superposition des trois faisceaux respectivement rouge, vert, et bleu ;
- un objectif pour collimater le faisceau résultant fourni par le second dispositif optique mélangeur, et le transmettre en direction d'un observateur.

Un tel dispositif permet à l'observateur de percevoir une image trichrome collimatée à l'infini, ou tout au moins à une distance de quelques mètres, pour éviter que l'observateur fasse un effort d'accommodation visuelle lorsque son regard va de l'extérieur de l'avion vers le dispositif de visualisation.

Un tel dispositif connu permet d'obtenir une bien meilleure définition et une bien meilleure luminosité qu'un tube cathodique unique trichrome du type à masque, ou qu'une valve unique trichrome à cristaux liquides. Il est naturellement plus encombrant, mais on peut envisager d'utiliser un tube cathodique rouge et bleu ayant une définition plus faible que celles du tube cathodique vert, parce que l'oeil est moins sensible aux couleurs rouge et bleu. Cependant, dans tous les cas, ce dispositif à deux ou trois tubes cathodiques à pour inconvénient d'être très encombrant et, d'autre part, pose de nombreux problèmes pour superposer les trois images et maintenir cette superposition en dépit des diverses dérives thermiques qui affectent la position des images sur les tubes, et qui affectent la position des tubes eux-mêmes.

L'utilisation de lames dichroïques pour superposer les trois images fournies respectivement par les trois tubes cathodiques produit des aberrations colorimétriques dues au fait que les rayons lumineux issus des tubes cathodiques n'ont pas tous la même incidence sur les lames dichroïques. En effet, les lames dichroïques ont une longueur d'onde de coupure qui dépend de l'angle d'incidence. Il est envisageable de remplacer chaque tube cathodique de ce dispositif connu, par une valve optique à cristaux liquides, munie d'une boîte à lumière comportant un filtre monochromatique et un écran diffusant. Le dispositif obtenu est moins encombrant que le dispositif à trois tubes cathodiques, mais il subsiste une réduction de contraste car les rayons lumineux issus de l'écran diffusant et traversant la valve optique ne sont pas tous orthogonaux au plan de cette valve. Or l'atténuation d'un rayon lumineux par une valve à cristaux liquides est fonction de l'angle d'incidence de ce rayon. D'autre part, les aberrations colorimétriques dues aux lames dichroïques sont identiques a celles d'un dispositif à plusieurs tubes cathodiques.

Dans le domaine des projecteurs de télévision en couleurs, il est connu, par le document SID-87 DIGEST, pages 75 à 78, de réaliser la projection d'une image trichrome sur un écran diffusant, au moyen d'un système optique qui comporte :
- trois valves optiques à cristaux liquides commandées respectivement par trois signaux électriques représentant respectivement une image rouge, une image verte, et une image bleue ;
- une source unique de lumière blanche ;
- des moyens pour séparer la lumière blanche en trois faisceaux colorés, de couleur rouge, verte, et bleue respectivement ;
- des moyens pour guider les trois faisceaux colorés sur les trois valves ;
- un cube dichroïque pour superposer les trois faisceaux colorés modulés respectivement par les trois valves, ce cube dichroïque étant constitué de quatre prismes accolés et dont les interfaces comportent des revêtements dichroïques ;
- un objectif de projection, pour former une image trichrome sur un écran diffusant, à partir du faisceau résultant de la superposition des trois faisceaux colorés modulés par les trois valves.

Ce dispositif connu a pour avantage d'être plus compact qu'un dispositif à deux ou trois tubes cathodiques, et de n'utiliser qu'une seule source de lumière blanche dont l'émission lumineuse est divisée en trois bandes spectrales pour obtenir les trois faisceaux colorés. Ceci permet d'obtenir une luminosité donnée pour une consommation électrique plus faible qu'avec trois boîtes à lumière munies chacune d'un filtre, puisque chaque filtre élimine deux tiers du spectre de la lumière et donc gaspille une grand partie de l'énergie fournie à chaque boîte à lumière. D'autre part, les problèmes pour superposer les trois images sont réduits. En effet, la position de chaque pixel est définie par la structure de chaque valve au lieu de l'être par le pointage d'un faisceau électronique et les valves sont très proches du cube dichroïque superposant les trois images.

Il est envisageable d'adapter ce dispositif connu, afin de réaliser un dispositif de visualisation collimatée pour un tableau de bord d'aéronef. Cependant il est souhaitable de réduire le plus possible son encombrement car le dispositif doit être inséré dans un espace très limité situé derrière un tableau de bord. L'encombrement du dispositif est déterminé essentiellement par l'encombrement des moyens pour séparer la lumière blanche d'éclairage en trois faisceaux colorés et pour guider ces trois faisceaux colorés sur les trois valves.

De même, pour réaliser un projecteur d'images de télévision, à l'usage du grand public, il est souhaitable de réduire l'encombrement du dispositif afin de le rendre plus pratique à utiliser et moins coûteux à fabriquer, à stocker, et à distribuer dans le commerce.

Le but de l'invention est de proposer un dispositif de visualisation moins encombrant que les dispositifs de type connu. En particulier, le but de l'invention est de réduire l'encombrement des guides de lumière, tout en maintenant leur fonction qui consiste à éclairer de manière uniforme les valves. Cette réduction d'encombrement des guides de lumière permet, en gardant la même taille pour les valves, de réduire l'encombrement de l'ensemble du dispositif de visualisation, ou bien permet, pour un encombrement donné, d'utiliser des valves de taille utile plus importante, c'est-à-dire ayant un pas élémentaire plus grand pour une même définition des images.

L'objet de l'invention est un dispositif de visualisation dans lequel au moins l'un des guides de faisceaux colorés est constitué par des miroirs holographiques. Ceux-ci présentent la propriété de ne pas suivre les lois de Descartes, et permettent donc une inclinaison du miroir plus importante que celle d'un miroir classique, par rapport aux faisceaux à guider. Cependant, un miroir holographique ne peut fonctionner correctement que dans une gamme de longueurs d'onde relativement étroite et pour une incidence prédéterminée. Dans le dispositif selon l'invention, les faisceaux à guider ont chacun une gamme de longueurs d'onde relativement étroite, respectivement dans le rouge et dans le bleu, ce qui permet un fonctionnement correct des miroirs holographiques. Un miroir holographique procure même un effet de filtrage qui atténue les longueurs d'onde indésirables. En outre, les faisceaux à guider sont pseudo-parallèles et ont donc une faible gamme de valeurs d'incidence, autour d'une valeur moyenne. Un miroir holographique capable de travailler dans ces conditions est alors facile à réaliser, par des techniques connues.

Selon l'invention, il est réalisé un dispositif de visualisation, en couleurs, comportant des miroirs holographiques comportant :
- trois valves optiques à cristaux liquides, commandées respectivement par trois signaux électriques représentant respectivement une image rouge, une image verte, et une image bleue ; et placées de telle sorte que les plans des valves sont parallèles à une direction commune et l'un d'eux est orthogonal aux deux autres ;
- une source unique de lumière blanche ;
- des moyens pour séparer la lumière blanche en trois faisceaux colorés, de couleur rouge, verte, et bleue respectivement ;
- des moyens pour guider respectivement les trois faisceaux colorés sur les trois valves ;
- des moyens pour superposer trois faisceaux issus respectivement des trois valves, en un seul faisceau résultant ;
- un écran diffusant ;
- des moyens, présentant un axe optique, pour former une image trichrome sur l'écran diffusant, à partir du faisceau résultant ;

caractérisé en ce que la source de lumière blanche comporte des moyens pour former un faisceau de lumière blanche pseudo-parallèle c'est-à-dire parallèle à l'axe optique des moyens pour former une image trichrome sur l'écran ; et en ce que les moyens pour guider les trois faisceaux colorés comportent au moins deux miroirs holographiques.

L'invention sera mieux comprise et d'autres détails apparaîtront à l'aide de la description ci-dessous et des figures l'accompagnant :
- la figure 1 représente schématiquement un dispositif de visualisation selon l'art antérieur ;
- la figure 2 représente schématiquement un premier exemple de réalisation du dispositif selon l'invention ;
- la figure 3 représente les diagrammes de transmission de lames dichroïques de cet exemple de réalisation ;
- la figure 4 représente un deuxième exemple de réalisation du dispositif selon l'invention ;
- la figure 5 représente schématiquement une variante de cet exemple de réalisation, comportant en outre un dispositif d'éclairage de secours ;
- la figure 6 représente le schéma synoptique d'un troisième exemple de réalisation du dispositif selon l'invention ;
- la figure 7 représente le schéma synoptique d'une variante de ce troisième exemple de réalisation, comportant en outre un dispositif d'éclairage de secours ;
- la figure 8 représente les diagrammes de transmission des lames et des surfaces dichroïques de ce troisième exemple de réalisation.

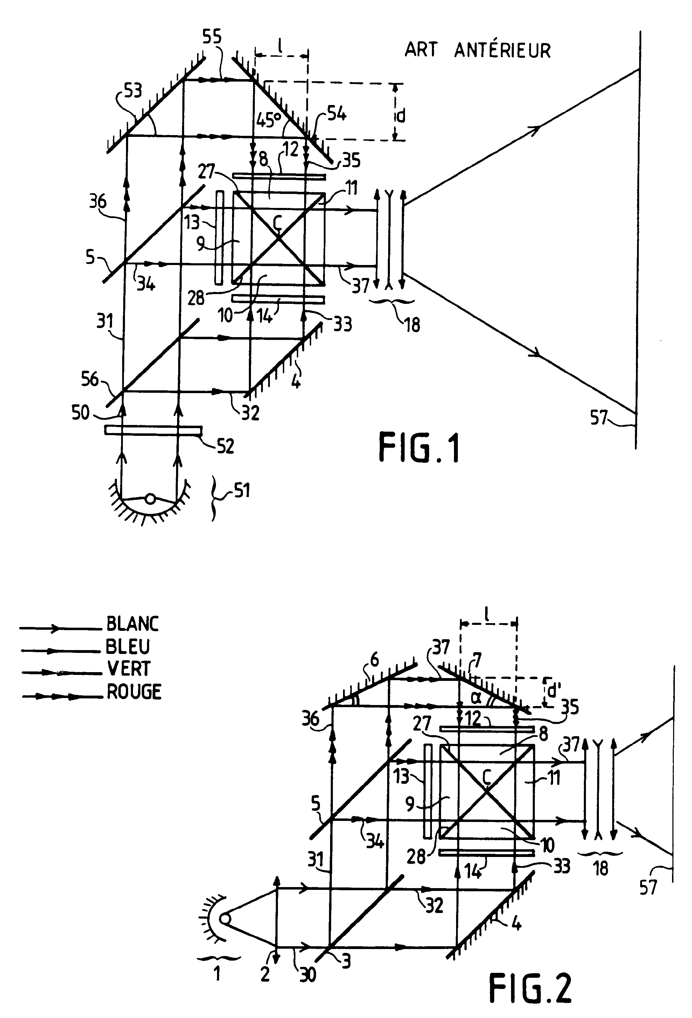

La figure 1 représente schématiquement le dispositif de visualisation décrit dans le document SID-87 DIGEST, page 75 à 78. Il comporte trois valves optiques, 12, 13, 14 commandées respectivement par trois signaux électriques représentant respectivement une image rouge, une image verte, et une image bleue. Ces trois valves sont éclairées respectivement par trois faisceaux, 35, 34, 33, respectivement de couleur rouge, verte, et bleue. Les trois valves 12, 13, 14 ont des dimensions identiques et sont disposées de telle façon que leurs axes optiques concourent en un point C, sont coplanaires, et dont l'un est orthogonal aux deux autres.

Les trois faisceaux, 33, 34, 35 sont obtenus en séparant un faisceau de lumière blanche en trois faisceaux colorés. Les faisceaux lumineux 35, 34, 33 sont modulés, bidimensionnellement, respectivement par les valves 12, 13, et 14. Les trois faisceaux issus respectivement des trois valves sont superposés en un seul faisceau résultant 37, constitué de rayons tous parallèles entre eux, au moyen d'un dispositif optique appelé "cube dichroïque". Le cube dichroïque est constitué de quatre prismes identiques : 8 à 11, qui sont accolés entre eux en ayant une arête commune passant par le point de concours C des axes optiques des valves 12 à 14, et parallèle au plan de chacune de ces valves. Les faces accolées des prismes ont reçu un traitement leur permettant de constituer deux surfaces dichroïques 27 et 28.

La valve 12 est parallèle à une face du cube qui est constituée par face libre du prisme 8. La valve 13 est parallèle à une face du cube qui est constituée par la face libre du prisme 9. La valve 14 est parallèle à une face du cube qui est constituée par la face libre du prisme 10. La face du cube est constituée par la face libre du prisme 11 constitue la sortie du cube fournissant le faisceau résultant 36.

La surface dichroïque 27 est constituée pour moitié par l'interface des prismes 8 et 9, et pour moitié par l'interface des prismes 10 et 11. La surface dichroïque 28 est constituée pour moitié par l'interface des prismes 8 et 11, et pour moitié par l'interface des prismes 9 et 10. La surface dichroïque 27 réfléchit vers la sortie du cube le faisceau de lumière rouge 35 qui à été modulé par la valve 12. La surface dichroïque 28 réfléchit vers la sortie du cube le faisceau de lumière bleue 33 qui a été modulé par la valve 14. Les surfaces 27 et 28 laissent passer, sans le dévier, le faisceau de lumière verte 34 qui a été modulé par la valve 13.

Le faisceau résultant 37 permet d'observer une image trichrome sur un écran diffusant 57, après projection par des moyens optiques 18 qui peuvent être un objectif de projection classique.

Les pixels rouges, les pixels verts, et les pixels bleus sont parfaitement superposés, ce qui permet d'obtenir une résolution identique à celle de chacune des valves 12 à 14. En utilisant, par exemple, trois valves de 1024 x 1024 pixels, il est donc possible d'obtenir une image trichrome de 1024 x 1024 pixels blancs. La superposition des pixels de couleur peut être réalisée avec une précision bien meilleure que celle obtenue avec le dispositif connu comportant trois tubes cathodiques monochromes, car l'emplacement de chaque pixel dans une valve optique est défini de manière immuable et indépendante des dérives thermiques et autres. D'autre part, le montage mécanique des trois valves et du cube dichroïque est très compact, ce qui réduit les phénomènes de dérives dues aux dilatations et aux contraintes vibratoires.

Une source de lumière blanche 51, constituée d'une lampe au xénon et d'un réflecteur, fournit un faisceau de lumière blanche 50 qui est filtré par un filtre anticalorique 52. Le faisceau de lumière blanche 50 est séparé tout d'abord en un faisceau de lumière verte et rouge 31, et en un faisceau de lumière bleue 32, au moyen d'une première lame dichroïque 56 dont le plan fait un angle de 45° par rapport à l'axe du faisceau 50. Le faisceau 31 est issu de la lame 56 dans le prolongement du faisceau 50 alors que le faisceau 32 est issu de la lame 56 perpendiculairement au faisceau 50. Le faisceau bleu 32 est réfléchi par un miroir classique 4 et constitue alors un faisceau 33 arrivant sur la valve 14. Son axe à une incidence nulle. Le plan du miroir 4 fait un angle de 45° par rapport à l'axe du faisceau 32 et par rapport au plan de la valve 14.

Le faisceau 31 est à son tour divisé en un faisceau de lumière verte 34 et en un faisceau de lumière rouge 36, au moyen d'une seconde lame dichroïque 5 dont le plan fait un angle de 45° par rapport à l'axe du faisceau 31. Le faisceau 36 est issu de la lame 5 dans le prolongement du faisceau 31 alors que le faisceau vert 34 est réfléchi par la lame 5, avec un angle de réflexion égal à 45°, puis arrive sur la valve 13. Son axe a une incidence nulle. Le faisceau rouge 36 est réfléchi successivement par deux miroirs classiques 53 et 54 qui le dévient de 180°. Le plan du miroir 53 fait un angle de 45° par rapport au faisceau 36. Le faisceau réfléchi, 55, à un angle de réflexion égal à 45°. Il arrive sur le miroir 54 avec un angle d'incidence de 45° puis est réfléchi avec un angle de réflexion de 45° et constitue alors le faisceau 35 arrivant sur la valve 12. L'axe du faisceau 35 a un angle d'incidence nul.

Il est à remarquer que l'axe optique de la source 51 de lumière blanche est perpendiculaire à l'axe optique des moyens optiques 18, ce qui contribue à l'encombrement de ce dispositif.

La figure 2 représente schématiquement un premier exemple de réalisation du dispositif de visualisation selon l'invention, plus particulièrement destiné à constituer un projecteur d'images de télévision, à l'usage du grand public. Il comporte certains éléments qui sont analogues à des éléments du dispositif selon l'art antérieur, décrits précédemment. Ces éléments analogues portent la même référence numérique. En effet, ce premier exemple de réalisation comporte, comme éléments : trois valves à cristaux liquides, 12, 13, 14 ; un cube dichroïque mélangeur constitué de quatre prismes accolés, 8 à 11 ; un miroir classique 4 ; une lame dichroïque 5 transmettant la couleur rouge et réfléchissant la couleur verte ; et des moyens optiques 18 pour projeter un faisceau résultant 37 sur un écran diffusant 57.

Cet exemple de réalisation diffère de celui représenté sur la figure 1 par la position de la source de lumière blanche et par le mode de réalisation du guide de lumière conduisant le faisceau rouge 36 vers la valve 12. Une source de lumière blanche fournit un faisceau 30 dont l'axe optique est parallèle à l'axe optique des moyens optiques 18 utilisés pour la projection. Ceci conduit à utiliser une lame dichroïque 3 différente de la lame dichroïque 56. La source de lumière blanche est constituée par une lampe au xénon 1, munie d'un réflecteur, et par un condenseur asphérique 2 collimatant à l'infini tous les rayons du faisceau 30.

La lame dichroïque 3 à une position identique à celle de la lame 56. La lame dichroïque 5 et le miroir classique 4 ont la même position que dans le dispositif selon l'art antérieur. Le plan de la lame 3 fait un angle de 45° par rapport au faisceau de lumière blanche 30. Un faisceau de lumière verte et bleue 31 est réfléchi avec un angle de réflexion de 45° alors qu'un faisceau rouge 32 est transmis dans le prolongement du faisceau 30. Le faisceau 31 est ensuite divisé en un faisceau de lumière bleue 36 et en un faisceau de lumière verte 34, par la lame 5, de manière analogue à celle décrite précédemment. De même, le faisceau rouge 32 est réfléchi par le miroir 4 de manière analogue à celle décrite précédemment.

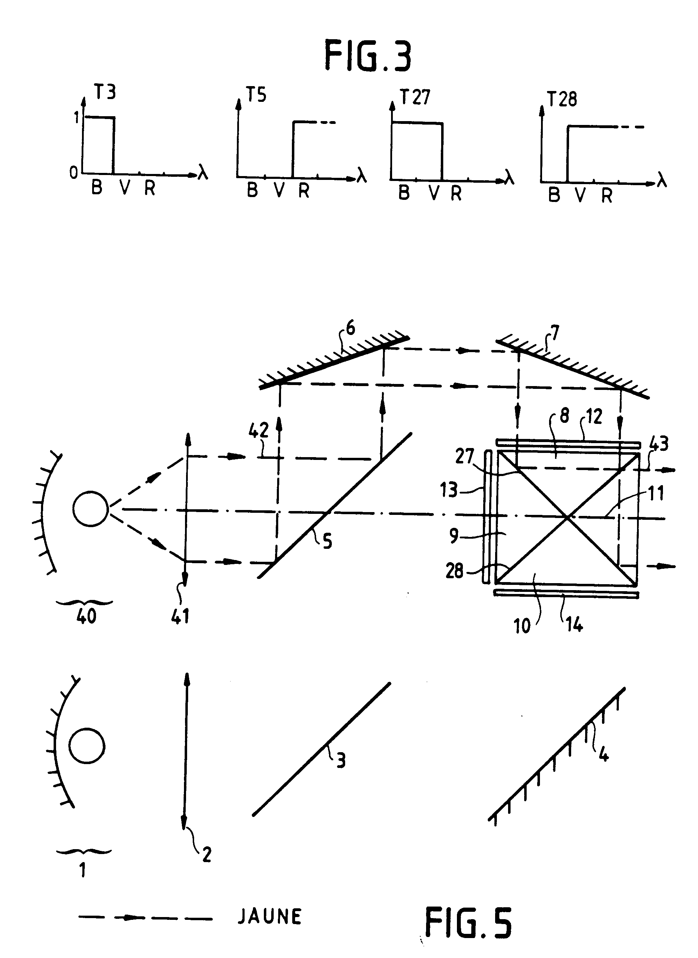

La figure 3 représente les diagrammes de transmission respectifs des lames dichroïques 3 et 5, et des surfaces dichroïques 27 et 28, en fonction de la longueur d'onde λ, celle-ci étant représentée par la lettre B pour les longueurs d'onde correspondant à la couleur bleue, par la lettre V pour les longueurs d'onde correspondant à la couleur verte, et par la lettre R pour les longueurs d'onde correspondant à la couleur rouge. Ce diagramme montre que la lame 3 ne transmet que la couleur bleue, la lame 5 ne transmet que la couleur rouge, la surface 27 transmet la couleur bleue et la couleur verte, et la surface 28 transmet la couleur verte et la couleur rouge. Les longueurs d'onde non transmises sont réfléchies avec de faibles pertes.

Le fait d'utiliser une source de lumière blanche unique, et deux lames dichroïques pour obtenir trois faisceaux colorés a pour avantage de procurer un bon rendement lumineux, en comparaison d'un système d'éclairage comportant trois sources de lumière blanche munies chacune d'un filtre éliminant deux tiers du spectre. Il a, par contre, un inconvénient qui est une perte de toute la visualisation en cas de panne de la source de lumière blanche. Une variante de réalisation décrite plus loin remédie à cet inconvénient en prévoyant une source de lumière de secours qui ne complique pas la réalisation du dispositif de visualisation.

D'autres modes de réalisation sont possibles pour constituer une source de lumière blanche fournissant un faisceau pseudo-parallèle. Le changement d'orientation de l'axe optique de cette source de lumière blanche permet de rendre plus compacte le dispositif de visualisation, par rapport à l'exemple de réalisation selon l'art antérieur, représenté sur la figure 1.

Une seconde différence, par rapport au dispositif de l'art antérieur, réside dans le guide de lumière amenant le faisceau 36 sur la valve 12. Ce guide comporte deux miroirs holographiques 6 et 7 réalisant une déviation de 180° du faisceau 36. Le faisceau 36 arrive sur le miroir 6 en faisant un angle de 90°- par rapport à son plan puis est réfléchi en faisant un angle α par rapport à son plan, et constitue alors le faisceau 37.

Le faisceau 37 arrive sur le miroir 7 en faisant un angle de α par rapport à son plan puis est réfléchi en faisant un angle de 90°-α par rapport à son plan et constitue alors le faisceau 35 qui est orthogonal au plan de la valve 12.

Les miroirs holographiques 6 et 7 ne suivent pas les lois de Descartes. Ils sont fabriqués pour un angle d'incidence et un angle de réflexion donnés, et pour une gamme de longueurs d'onde relativement étroite. Dans le dispositif selon l'invention, les faisceaux colorés 33, 34, 35 sont constitués de rayons parallèles entre eux, grâce au condenseur 2. Les rayons ont donc tous la même incidence sur les miroirs 6 et 7.Dans cet exemple, l'angle α est choisi égal à 60°. L'angle d'incidence sur le miroir 6 est donc égal à 60° alors que l'angle de réflexion est égal à 60°, et la gamme de longueurs d'onde qui est choisie correspond à la couleur rouge. Le faisceau 36 étant constitué de lumière rouge exclusivement, les miroirs holographiques 6 et 7 se trouvent dans des conditions de fonctionnement permettant de réfléchir le faisceau 36 puis le faisceau 37 avec une dispersion spectrale négligeable. Cette dispersion spectrale est fonction aussi de la valeur de l'angle α, c'est pourquoi il est nécessaire de choisir une valeur α qui n'est pas trop proche de zéro. Les miroirs holographiques 6 et 7 sont fabriqués selon un procédé classique.

Il apparaît sur les figures 1 et 2, que l'encombrement du guide de lumière constitué par les miroirs holographiques 6 et 7 est très inférieur celui du guide constitué par les miroirs 53 et 54, car le faisceau 37 a une largeur d' qui est inférieure à la largeur d du faisceau 55. Dans le cas des miroirs classiques 53 et 54, la largeur d du faisceau 55 est égale à la longueur utile l de la valve 12. Dans le cas des miroirs holographiques 6 et 7, la largeur d' du faisceau 37 est égale à l.tgα, c'est-à- dire l/√3 dans cet exemple. L'encombrement du guide est donc presque réduit de moitié. Les figures 1 et 2 représentent les miroirs 6 et 7 plus éloignés de la valve 12 qu'ils ne le sont en réalité, pour une plus grande clarté de la figure et pour permettre l'inscription des références numériques. En pratique, une extrémité du miroir 7 est pratiquement en contact avec une extrémité de la valve 12 et celle-ci peut être plaquée contre la base du prisme 8.

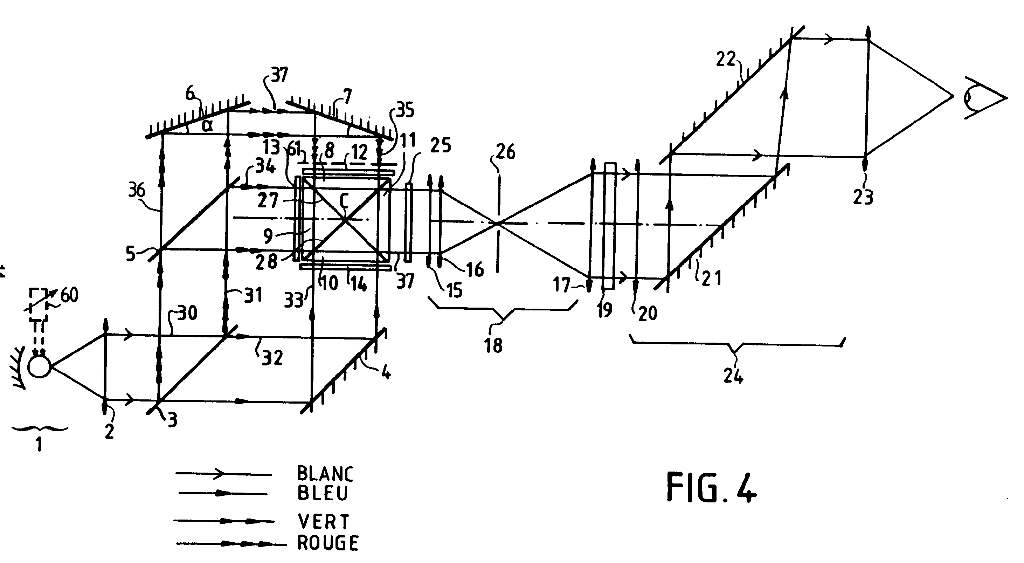

La figure 4 représente schématiquement un deuxième exemple de réalisation du dispositif selon l'invention, adapté pour constituer un dispositif de visualisation collimatée pour un tableau de bord d'aéronef. Les éléments analogues à ceux du premier exemple portent une référence numérique identique.

L'image trichrome à la sortie du cube dichroïque est visible sous un angle d'ouverture trop faible pour pouvoir être utilisé directement dans un dispositif de visualisation pour aéronef. Il est donc prévu des moyens optiques 18 pour augmenter cette ouverture en formant une image trichrome sur un écran diffusant 19, à partir du faisceau résultant 37. Ces moyens optiques 18 sont constitués d'une association de lentilles 15, 16, et 17.

Des moyens optiques 24 collimatent à une distance de 15 mètres, par exemple, les rayons issus de l'image formée sur l'écran diffusant 19, et décalent ces rayons pour les rapprocher de la direction de vue de l'observateur. Le choix des moyens optiques 24 dépend des contraintes d'installation du dispositif à bord de l'aéronef. Dans cet exemple, les moyens optiques 24 sont constitués de groupes de deux lentilles 20 et 23 entre lesquelles sont intercalés deux miroirs 21 et 22.

Dans cet exemple, le champ de vision fourni à l'observateur est de l'ordre de 20° x 20°. La valeur de ce champ est déterminée seulement par les caractéristiques des moyens optiques 24, pour des dimensions de l'image sur l'écran diffuseur 19. Les caractéristiques des moyens optiques 24 peuvent donc être calculées indépendamment des caractéristiques des moyens optiques 18, sauf si l'on cherche à compenser les aberrations des moyens 18 par les moyens 24. Pour diminuer les aberrations de moyens 18, il est envisageable aussi d'utiliser un écran diffusant 19 de forme sphérique.

Un dispositif de visualisation pour aéronef requiert une dynamique de luminance très importante pour être utilisable dans toutes les conditions d'éclairement possibles. Pour obtenir une telle dynamique, plusieurs solutions sont réalisables.

Une solution consiste à réduire directement la puissance électrique fournie à la lampe. Cependant, comme la couleur de la lumière varie en fonction de cette puissance électrique, il est nécessaire de rajouter un compensateur colorimétrique dans le trajet de l'un des faisceaux colorés 33, 34, 35. Un tel compensateur peut être un obturateur à cristaux liquides. Dans ce cas, il suffit de rajouter un seul polariseur devant l'obturateur, l'analyseur de cet obturateur étant réalisé par le polariseur de la valve optique 12, 13 ou 14. Sur la figure 4 cette solution a été représentée, en traits interrompus, par un générateur 60 dont la tension de sortie, qui alimente la source de lumière 1, est réglable, et par un obturateur 61, disposé dans le trajet du faisceau 35.

Une autre solution consiste à agir sur plusieurs éléments du dispositif de visualisation situés après le cube. A cet effet, il est prévu un iris réglable 26 placé au niveau de la pupille des moyens optiques 18. Cet iris permet de faire varier la luminance de l'image. En plus, il est prévu un obturateur à cristaux liquides 25 qui est intercalé entre la sortie du cube dichroïque et le diffuseur 19, sur le chemin du faisceau résultant 37. Cet obturateur à une transparence qui est variable dans un rapport très important. Il est à noter qu'il n'est pas nécessaire de prévoir un polariseur dans cet obturateur à cristaux liquides 25, puisque la lumière est déjà polarisée par des polariseurs incorporés aux valves optiques 12 à 14. L'association de l'iris 26 et de l'obturateur 25 permet d'obtenir la dynamique requise.

Les valves à cristaux liquides 12 à 14 et l'obturateur 25 sont de type connu.

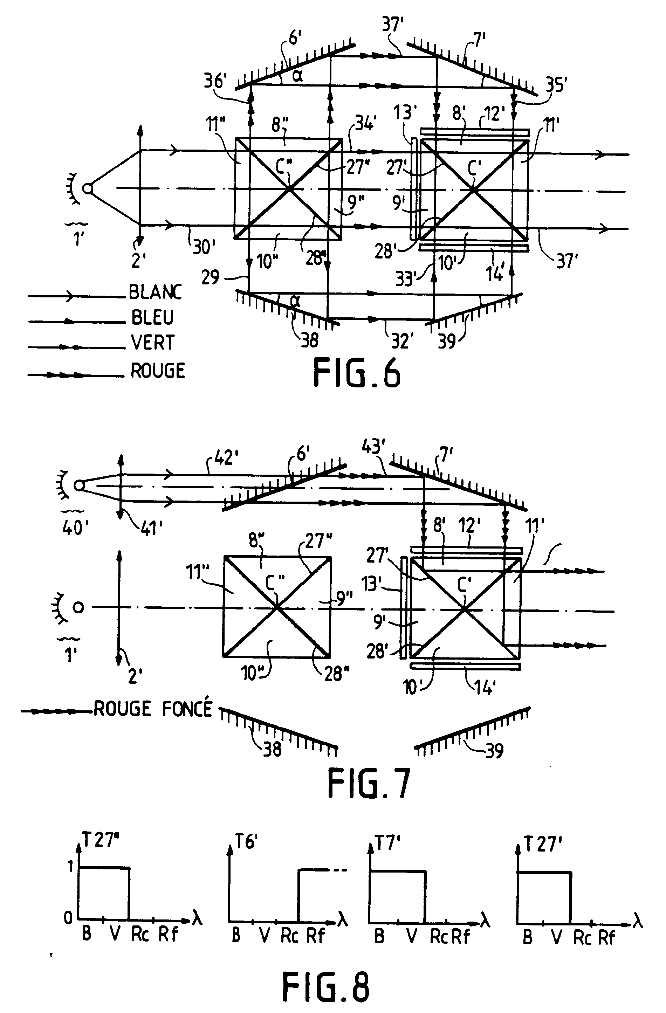

La figure 5 représente schématiquement une variante de réalisation de l'exemple décrit précédemment, permettant de secourir ce dispositif de visualisation en cas de panne de la source de lumière blanche 1. Ce dispositif de secours permet d'obtenir une image monochrome de couleur jaune. Il est simple puisqu'11 comporte seulement une source de lumière jaune 40 fournissant un faisceau 42 collimaté à l'infini. Cette source 40 est constituée d'une lampe émettant dans le jaune, ou d'une lampe émettant une lumière blanche et qui est munie d'un filtre jaune. Le faisceau 42 est collimaté par un condenseur 41.

Le faisceau 42 est parallèle à l'axe du faisceau de lumière blanche 30 mais est translaté par rapport à celui-ci de telle sorte qu'il est dans le prolongement de l'axe optique du cube dichroïque, et des moyens optiques 18 et 24. Le faisceau 42 arrive sur la lame dichroïque 5 du côté opposé à celui où arrive le faisceau de lumière verte et rouge 31. Le faisceau jaune 42 est réfléchi par la lame dichroïque 5 qui est conçue pour réfléchir aussi bien le vert que le jaune, et laisser passer le rouge. Le faisceau 42 suit ensuite le même chemin que les faisceau 36, 37, 35 lorsque la source 1 fonctionne. Les miroirs holographiques 6 et 7 sont fabriqués de façon à réfléchir aussi le jaune en plus du rouge. Le faisceau jaune traverse donc la valve 12 puis est réfléchi par la surface dichroïque 27 à l'intérieur du cube dichroïque. Il constitue un faisceau 43 qui remplace le faisceau 37.

La figure 6 représente schématiquement un troisième exemple de réalisation d'un dispositif selon l'invention, qui comporte un guide pour le faisceau rouge et un guide pour le faisceau bleu, constitués chacun par deux miroirs holographiques, afin de réduire aussi l'encombrement du guide pour le faisceau bleu. Comme cela a été mentionné à propos du premier exemple de réalisation, le faisceau entre les deux miroirs holographiques constituant un guide a une largeur inférieure à la longueur utile de chaque valve. Ceci permet de réduire l'encombrement du guide, mais a pour conséquence la nécessité d'utiliser un couple de miroirs holographiques. Autrement dit, le miroir 4 du premier exemple de réalisation ne peut pas être simplement remplacé par un miroir holographique ayant une orientation différente de 45°. C'est pourquoi, ce troisième exemple de réalisation comporte des moyens différents de ceux du premier et du deuxième exemple, pour séparer un faisceau de lumière blanche en trois faisceaux colorés. Ces moyens sont constitués par un cube dichroïque, dit séparateur, constitué de quatre prismes accolés : 8'', 9'', 10'', 11''.

Ce troisième exemple de réalisation comporte en outre : trois valves à cristaux liquides : 12', 13', 14' ; un cube dichroïque, dit mélangeur, constitué de quatre prismes accolés : 8', 9', 10', 11' ; deux miroirs holographiques 6' et 7' constituant un guide pour un faisceau rouge ; deux miroirs holographiques 38 et 39 constituant un guide pour un faisceau bleu ; et une source de lumière blanche collimatée, constituée par une lampe munie d'un réflecteur, 1', et par un condenseur 2'. Les éléments identiques à ceux du premier exemple de réalisation portent la même référence numérique avec l'indice '.

Le cube dichroïque séparateur, constitué des prismes 8'' à 11'', est lui-même identique au cube dichroïque mélangeur constitué des prismes 8' à 11'. Les centres C'' et C' de ces cubes sont alignés sur l'axe optique d'un faisceau de lumière blanche 30' fourni par la source de lumière blanche. Le dispositif est symétrique par rapport à un plan vertical passant entre les deux cubes dichroïques et perpendiculaire à la ligne C'C''. Les miroirs holographiques 6' et 7' sont disposés symétriquement, et les miroirs holographiques 38 et 39 sont disposés symétriquement. Les miroirs holographiques 38 et 39 sont semblables aux miroirs holographiques 6' et 7', sauf qu'ils sont fabriqués pour fonctionner dans une gamme de longueur d'onde correspondant à la couleur bleue. Ils sont fabriqués selon un procédé classique.

Les faces accolées des prismes 8'' à 11'' ont reçu un traitement leur permettant de constituer deux surfaces dichroïques 27'' et 28'', respectivement identiques aux surfaces dichroïques 27' et 28' du cube dichroïque mélangeur. La surface 27'' est symétrique de la surface 27' par rapport au plan de symétrie vertical. De même, la surface dichroïque 28'' est symétrique de la surface dichroïques 28', par rapport au plan de symétrie vertical. La source de lumière blanche fournit un faisceau parallèle 30' qui est appliqué orthogonalement à la base du prisme 11''. Les surfaces dichroïques 27'' et 28'' transmettent la composante de couleur verte qui forme un faisceau 34' qui est appliqué orthogonalement à la valve 13'.

La surface dichroïque 27'' réfléchit la composante rouge du faisceau 30' pour constituer un faisceau rouge 36' orthogonal au faisceau 30'. Le faisceau 36' est parallèle au faisceau 33'. Le faisceau 36' est réfléchi par le miroir holographique 6' et constitue ensuite un faisceau 37' de largeur plus réduite que celle du faisceau 36'. Il est réfléchi par le miroir holographique 7' et constitue ensuite un faisceau rouge 35' qui est appliqué orthogonalement à la valve 12'. Les miroirs holographiques 6' et 7' dévient donc le faisceau rouge 36' de 180° en restituant un faisceau rouge 35' ayant une largeur égale à celle du faisceau 36', et égale à la longueur utile de la valve 12'. Le plan du miroir holographique 6' est incliné d'un angle de 90°-α par rapport au faisceau 36' et le plan du miroir holographique 7' est incliné de 90°-α par rapport au faisceau 35'. L'angle peut être égal à 30° par exemple.

Le chemin suivi par le faisceau bleu 32'est symétrique du chemin suivi par le faisceau rouge 37', par rapport à la droite C'C''. La surface dichroïque 28'' réfléchit la composante bleue du faisceau de lumière blanche 30', orthogonalement à ce faisceau 30'. Un faisceau bleu 29 émerge donc de la base du prisme 10'' puis est réfléchi par le miroir holographique 38, pour constituer un faisceau bleu 32' de largeur inférieur à celle du faisceau 29. Le faisceau 32' est ensuite réfléchi par le miroir holographique 39 pour consituer un faisceau bleu 33' qui est appliqué orthogonalement à la valve 14' et qui a une largeur égale à la longueur utile de la valve 14'. Le plan du miroir holographique 38 fait un angle de 90°-α par rapport au faisceau 29 qu'il réfléchit. Le faisceau 32' arrive sur le miroir holographique 39 en faisant un angle α par rapport à son plan. Le faisceau 33' est renvoyé par le miroir 39 en faisant un angle de 90°-α par rapport au plan de ce miroir.

Le cube dichroïque mélangeur restitue un faisceau résultant 37 qui traverse ensuite des moyens optiques non représentés, pour le projeter sur un écran diffusant. Ce troisième exemple de réalisation peut être appliqué aussi bien à la projection d'images de télévision pour le grand public, qu'à la visualisation dans un aéronef. Dans ce dernier cas, il est prévu des moyens supplémentaires analogues aux moyens 20 à 26 décrits précédemment.

La figure 7 représente une variante du troisième exemple de réalisation, comportant en outre une source d'éclairement de secours constituée par une source de lumière blanche 40' et un condenseur 41'. Cette source de lumière blanche fournit un faisceau 42' dont l'axe est parallèle à l'axe C''C', mais qui est décalé de telle sorte qu'il passe par le centre des miroirs holographiques 6' et 7'. Le faisceau 42' est appliqué sur le miroir 6' en faisant un angle α avec son plan. La partie rouge foncé du faisceau de lumière blanche 42' traverse le miroir holographique 6' puis constitue un faisceau 43' qui est réfléchi par le miroir holographique 7' pour être appliqué orthogonalement sur la valve 12'. Après avoir été modulé par la valve 12' ce faisceau est réfléchi par la surface dichroïque 27' puis est renvoyé dans la direction de l'axe C''C', sort par la base du prisme 11' qui constitue la sortie du cube dichroïque mélangeur.

Selon cette variante, les miroirs holographiques 6' et 7' ne sont pas rigoureusement identiques puisque le miroir 6' doit transmettre le rouge foncé alors que le miroir 7' doit le réfléchir.

La figure 8 représente les diagrammes de transmission respectivement des surfaces dichroïques 27'' et 27', et des miroirs holographiques 6' et 7', pour cette variante du troisième exemple de réalisation. La gamme des longueurs d'onde correspondant à la couleur rouge foncée est repérée par les lettres Rf. La gamme des longueurs d'onde correspondant à la couleur rouge claire est repérée par les lettres Rc. Les surfaces dichroïques 27'' et 27' sont analogues et transmettent la couleur bleue et la couleur verte mais réfléchissent la couleur rouge claire et la couleur rouge foncée. Le miroir holographique 6' ne transmet que la couleur rouge foncée et réfléchit notamment la couleur rouge claire. Le miroir holographique 7' transmet la couleur bleue et la couleur verte, et réfléchit à la fois la couleur rouge claire et la couleur rouge foncé.

L'invention n'est pas limitée aux exemples de réalisation décrits ci-dessus. De nombreuses variantes sont à la portée de l'homme de l'art. Il est possible, notamment, de remplacer chaque cube dichroïque, par deux lames dichroïques orthogonales, au prix d'un encombrement plus grand ; dans ce cas les paires de surfaces dichroïques 27-28, 27'-28' et 27''-28'' seraient, chacune, remplacées par deux lames dichroïques orthogonales.

## Revendications

1. Dispositif de visualisation, à haute définition, en couleurs, comportant :
- trois valves optiques à cristaux liquides (12-14), commandées respectivement par trois signaux électriques représentant respectivement une image rouge, une image verte, et une image bleue ; et placées de telle sorte que les plans des valves sont parallèles à une direction commune ; et l'un d'eux des orthogonal aux deux autres
- une source unique (1,2) de lumière blanche ;
- des moyens (3,5) pour séparer la lumière blanche en trois faisceaux colorés (35,34,33), de couleur rouge, verte, et bleue respectivement ;
- des moyens (4,6,7) pour guider les trois faisceaux colorés (35,34,33) et les projeter respectivement sur les trois valves ;
- des moyens (8 à 11) pour superposer trois faisceaux issus respectivement des trois valves, en un seul faisceau résultant (36 ; 37) ;
- un écran diffusant (19) ;
- des moyens (18), présentant un axe optique, pour former une image trichrome sur l'écran diffusant (19), à partir du faisceau résultant (37) ;
caractérisé en ce que la source de lumière blanche comporte des moyens (2) pour former un faisceau (30) de lumière blanche pseudoparallèle c'est-à-dire parallèle à l'axe optique des moyens pour former une image trichrome sur l'écran ; et en ce que les moyens pour guider les trois faisceaux colorés (35, 34, 33) comportent au moins deux miroirs holographiques (6, 7).

2. Dispositif selon la revendication 1, caractérisé en ce que les moyens pour séparer la lumière blanche en trois faisceaux colorés comportent deux lames dichroïques parallèles (3,5), une première lame (3) séparant la lumière en faisceau bleu (32) et en un faisceau rouge et vert (31) ; une seconde lame (5) séparant le faisceau rouge et vert (31) en un faisceau vert (34) et en un faisceau rouge (36) ;
en ce que les moyens pour guider le faisceau rouge (36) comportent deux miroirs holographiques (6,7) pour dévier le faisceau rouge de 180° ;
et en ce que les moyens pour guider le faisceau bleu (32) comportent un miroir classique (4) pour dévier le faisceau bleu de 90°.

3. Dispositif selon la revendication 1 caractérisé en ce que les moyens pour séparer la lumière blanche en trois faisceaux colorés comportent un cube dichroïque (8''-11'') fournissant trois faisceaux colorés (36',34',29) coplanaires et dont l'un est orthogonal aux deux autres ;
en ce que les moyens pour guider le faisceau rouge (36') comportent deux miroirs holographiques (6',7') pour dévier le faisceau rouge de 180° ;
et en ce que les moyens pour guider le faisceau bleu (29) comportent deux autres miroirs holographiques (38,39) pour dévier le faisceau bleu de 180°.

4. Dispositif selon la revendication 2, caractérisé en ce qu'il comporte en outre une source (40,41) de lumière de secours, fournissant un faisceau, de couleur blanche (42), parallèle au faisceau de lumière verte (34) éclairant la valve (13) correspondant à l'image verte, ce faisceau (42) éclairant la valve (12) correspondant à l'image rouge après réflexion sur les miroirs holographiques (6,7).

5. Dispositif selon la revendication 3, caractérisé en ce qu'il comporte en outre une source (40',41') de lumière de secours, fournissant un autre faisceau de couleur blanche (42'), parallèle au faisceau de lumière rouge (37') vers les deux miroirs holographiques (6',7') destinés à guider le faisceau de lumière rouge ; cet autre faisceau (42') étant projeté sur un premier (6') de ces miroirs holographiques, qui est transparent pour le rouge foncé et réflecteur pour le rouge clair, puis, après avoir traversé le premier de ces miroirs holographiques, étant réfléchi par le second (7') de ces miroirs holographiques, qui est réflecteur à la fois pour le rouge foncé et pour le rouge clair.

6. Dispositif selon la revendication 1, caractérisé en ce que les moyens pour superposer les trois faisceaux issus respectivement des trois valves (12-14) en un seul faisceau résultant (37), comportent un cube dichroïque constitué de quatre prismes accolés (8-11) ayant une arête commune passant par le point de concours (C) des axes optiques des valves (12-14) et parallèles aux plans de ces valves ; et en ce que les faces accolées des prismes constituent deux surfaces dichroïques (27, 28).

7. Dispositif selon la revendication 1, en particulier pour tableau de bord d'aéronef, caractérisé en ce qu'il comporte en outre :
- un atténuateur réglable (25) à cristaux liquides, intercalé sur le chemin du faisceau résultant (36) ;
- des moyens optiques (24) pour collimater à grande distance l'image trichrome formée sur l'écran diffusant (19), avec un champ agrandi.

8. Dispositif selon la revendication 1, en particulier pour tableau de bord d'aéronef, caractérisé en ce qu'il comporte en outre des moyens de réglage (60) de l'intensité lumineuse de la source (1, 2) et, au moins sur le trajet de l'un des trois faisceaux colorés, un atténuateur réglable à cristaux liquides (61) pour réaliser une compensation colorimétrique en fonction de la couleur de la lumière blanche fournie par la source.

## Patentansprüche

1. Farbanzeigevorrichtung mit hoher Auflösung, mit:
- drei optischen Flüssigkristallventilen (12-14), die durch drei entsprechende elektrische Signale gesteuert werden, die ein rotes Bild, ein grünes Bild bzw. ein blaues Bild darstellen; und derart angeordnet sind, daß die Ebenen der Ventile zu einer gemeinsamen Richtung parallel sind und eine von ihnen zu den beiden anderen senkrecht ist;
- einer einzelnen Quelle (1, 2) für weißes Licht;
- Mitteln (3, 5) zum Trennen des weißen Lichts in drei Farbbündel (35, 34, 33) von roter, grüner bzw. blauer Farbe;
- Mitteln (4, 6, 7) zum Führen der drei Farbbündel (35, 34, 33) und zum Werfen eines jeden Bündels auf ein entsprechendes der drei Ventile;
- Mitteln (8 bis 11) zum Überlagern von drei Bündeln, die von den drei entsprechenden Ventilen ausgegeben werden, zu einem einzigen resultierenden Bündel (36; 37);
- einem Diffusionsschirm (19);
- Mitteln (18), die eine optische Achse aufweisen, um auf dem Diffusionsschirm (19) aus dem resultierenden Bündel (37) ein dreifarbiges Bild zu erzeugen; dadurch gekennzeichnet, daß die Quelle für weißes Licht Mittel (2) aufweist, um ein Bündel (30) von weißem Licht zu erzeugen, das pseudoparallel ist, d.h. parallel zur optischen Achse der Mittel zur Erzeugung eines dreifarbigen Bildes auf dem Schirm; und daß die Mittel zum Führen der drei Farbbündel (35, 34, 33) wenigstens zwei holographische Spiegel (6, 7) enthalten.

2. Vorrichtung gemäß Anspruch 1, dadurch gekennzeichnet, daß die Mittel zum Trennen des weißen Lichts in drei Farbbündel zwei parallele dichroitische Plättchen (3, 5) aufweisen, wobei ein erstes Plättchen (2) das Licht in ein blaues Bündel (32) und in ein rotes und grünes Bündel (31) trennt; wobei ein zweites Plättchen (5) das rote und grüne Bündel (31) in ein grünes Bündel (34) und in ein rotes Bündel (36) trennt;
daß die Mittel zum Führen des roten Bündels (36) zwei holographische Spiegel (6, 7) enthalten, um das rote Bündel um 180° abzulenken;
und daß die Mittel zum Führen des blauen Bündels (32) einen herkömmlichen Spiegel (4) enthalten, um das blaue Bündel um 90° abzulenken.

3. Vorrichtung gemäß Anspruch 1, dadurch gekennzeichnet, daß die Mittel zum Trennen des weißen Lichts in drei Farbbündel einen dichroitischen Würfel (8"-11") enthalten, der drei komplanare Farbbündel (36', 34', 29) liefert, von denen eines zu den beiden anderen senkrecht ist;
daß die Mittel zum Führen des roten Bündels (36') zwei holographische Spiegel (6', 7') enthalten, um das rote Bündel um 180° abzulenken;
und daß die Mittel zum Führen des blauen Bündels (29) zwei weitere holographische Spiegel (38, 39) enthalten, um das blaue Bündel um 180° abzulenken.

4. Vorrichtung gemäß Anspruch 2, dadurch gekennzeichnet, daß sie außerdem eine Ersatzlichtquelle (40, 41) enthält, die ein Bündel von weißer Farbe (42) liefert, das zu dem Bündel von grünem Licht (34), welches das dem grünen Bild entsprechende Ventil (13) beleuchtet, parallel ist, wobei dieses Bündel (42) nach der Reflexion an den holographischen Spiegeln (6, 7) das dem roten Bild entsprechende Ventil (12) beleuchtet.

5. Vorrichtung gemäß Anspruch 3, dadurch gekennzeichnet, daß sie außerdem eine Ersatzlichtquelle (40', 41') enthält, die ein weiteres Bündel von weißem Licht (42') liefert, daß zu dem Bündel von rotem Licht (37'), welches zu den beiden zur Führung des Bündels von rotem Licht vorgesehenen holographischen Spiegeln (6', 7') verläuft, parallel ist; wobei dieses weitere Bündel (42') auf einen ersten (6') dieser holographischen Spiegel geworfen wird, der für Dunkelrot durchlässig und für Hellrot reflektierend ist, dann, nach dem Durchgang durch den ersten dieser holographischen Spiegeln vom zweiten (7') dieser holographischen Spiegel reflektiert wird, der sowohl für Dunkelrot als auch für Hellrot reflektierend ist.

6. Vorrichtung gemäß Anspruch 1, dadurch gekennzeichnet, daß die Mittel zum Überlagern der von den drei entsprechenden Ventilen (12-14) ausgegebenen drei Bündel zu einem einzigen resultierenden Bündel (37) einen dichroitischen Würfel enthalten, der aus vier aneinandergefügten Prismen (8-11) gebildet ist, die eine gemeinsame Kante besitzen, die durch den Schnittpunkt (C) der optischen Achsen der Ventile (12-14) verläuft und zu den Ebenen dieser Ventile parallel ist; und daß die aneinandergefügten Seiten der Prismen zwei dichroitische Flächen (27, 28) bilden.

7. Vorrichtung gemäß Anspruch 1, insbesondere für eine Flugzeug-Instrumententafel, dadurch gekennzeichnet, daß sie außerdem folgendes enthält:
- ein einstellbares Dämpfungsglied (25) mit Flüssigkristallen, das in den Weg des resultierenden Strahlenbündels (36) eingefügt ist;
- optische Mittel (24) zum Kollimieren des auf dem Diffusionsschirm (19) gebildeten dreifarbigen Bildes auf große Entfernung mit vergrößertem Feld.

8. Vorrichtung gemäß Anspruch 1, insbesondere für eine Flugzeug-Instrumententafel, dadurch gekennzeichnet, daß sie außerdem Mittel (60) zur Steuerung der Lichtintensität der Quelle (1, 2) und wenigstens im Weg eines der drei Farbbündel eine steuerbare Flüssigkristall-Dämpfungsvorrichtung (61) enthält, um in Abhängigkeit von der Farbe des von der Quelle gelieferten weißen Lichts eine farbmetrische Kompensation auszuführen.

## Claims

1. High-definition colour display device, including:
- three liquid crystal optical valves (12-14) controlled respectively by three electrical signals representing respectively a red image, a green image, and a blue image; and placed in such a way that the planes of the valves are parallel to a common direction and one of them is orthogonal to the two others;
- a single source (1, 2) of white light;
- means (3, 5) for separating the white light into three coloured beams (35, 34, 33), respectively red, green and blue in colour;
- means (4, 6, 7) for guiding the three coloured beams (35, 34, 33) and projecting them respectively onto the three valves;
- means (8 to 11) for superimposing three beams output respectively by the three valves, into a single resultant beam (36; 37);
- a diffusing screen (19);
- means (18), exhibiting an optical axis, for forming a three-colour image on the diffusing screen (19), from the resultant beam (37); characterised in that the source of white light includes means (2) for forming a beam (30) of white light which is pseudoparallel, that is to say parallel to the optical axis of the means, in order to form a three-colour image on the screen; and in that the means for guiding the three coloured beams (35, 34, 33) include at least two holographic mirrors (6, 7).

2. Device according to Claim 1, characterised in that the means for separating the white light into three coloured beams include two parallel dichroic plates (3, 5), a first plate (3) separating the light into a blue beam (32) and into a red and green beam (31); a second plate (5) separating the red and green beam (31) into a green beam (34) and into a red beam (36); in that the means for guiding the red beam (36) include two holographic mirrors (6, 7) for bending the red beam by 180°; and in that the means for guiding the blue beam (32) include a conventional mirror (4) for bending the blue beam by 90°.

3. Device according to Claim 1, characterised in that the means for separating the white light into three coloured beams include a dichroic cube (8''-11'') supplying three coplanar coloured beams (36', 34', 29) one of which is orthogonal to the two others; in that the means for guiding the red beam (36') include two holographic mirrors (6', 7') for bending the red beam by 180°; and in that the means for guiding the blue beam (29) include two other holographic mirrors (38, 39) for bending the blue beam by 180°.

4. Device according to Claim 2, characterised in that it further comprises an emergency light source (40, 41) supplying a beam, white in colour (42), parallel to the beam of green light (34) illuminating the valve (13) corresponding to the green image, this beam (42) illuminating the valve (12) corresponding to the red image after reflection on the holographic mirrors (6, 7).

5. Device according to Claim 3, characterised in that it further comprises an emergency light source (40', 41') supplying another beam, white in colour, (42'), parallel to the beam of red light (37') towards the two holographic mirrors (6', 7') intended to guide the beam of red light; this other beam (42') being projected onto a first (6') of these holographic mirrors, which is transparent for dark red and reflective for light red, then, after having been passed through the first of these holographic mirrors, being reflected by the second (7') of these holographic mirrors, which is a reflector both for dark red and for light red.

6. Device according to Claim 1, characterised in that the means for superimposing the three beams output respectively from the three valves (12-14) into a single resultant beam (37), include a dichroic cube consisting of four prisms set face-to-face (8-11) having a common edge passing through the meeting point (C) of the optical axes of the valves (12-14) and parallel to the planes of these valves; and in that the side-by-side faces of the prisms constitute two dichroic surfaces (27, 28).

7. Device according to Claim 1, in particular for an aircraft instrument panel, characterised in that it further includes:
- an adjustable liquid crystal attenuator (25), interposed on the path of the resultant beam (36);
- optical means (24) for collimating, in the far distance, the three-colour image formed on the diffusing screen (19) with an enlarged field.

8. Device according to Claim 1, in particular for an aircraft instrument panel, characterised in that it further includes means for adjusting (60) the luminous intensity of the source (1, 2) and, at least on the path of one of the three coloured beams, an adjustable liquid crystal attenuator (61) for carrying out colorimetric compensation as a function of the colour of the white light supplied by the source.
